Europäisches Patentamt

European Patent Office

Office européen des brevets

(11) Publication number: **0 171 767**
**B1**

# (12) EUROPEAN PATENT SPECIFICATION

(45) Date of publication of patent specification: **29.11.89**

(51) Int. Cl.⁴: **G 02 B 6/00, F 21 V 8/00**

(21) Application number: **85110038.8**

(22) Date of filing: **09.08.85**

(54) A light radiator.

(30) Priority: **10.08.84 JP 168536/84**

(43) Date of publication of application:
**19.02.86 Bulletin 86/08**

(45) Publication of the grant of the patent:
**29.11.89 Bulletin 89/48**

(84) Designated Contracting States:
**CH DE FR GB IT LI NL SE**

(56) References cited:
**EP-A-0 164 129**
**EP-A-0 166 339**
**FR-E- 47 621**
**US-A-4 144 663**

(73) Proprietor: **Mori, Kei**
**3-16-3-501, Kaminoge**
**Setagaya-ku Tokyo (JP)**

(72) Inventor: **Mori, Kei**
**3-16-3-501, Kaminoge**
**Setagaya-ku Tokyo (JP)**

(74) Representative: **Patentanwälte Grünecker,**
**Kinkeldey, Stockmair & Partner**
**Maximilianstrasse 58**
**D-8000 München 22 (DE)**

Courier Press, Leamington Spa, England.

## Description

The present invention relates to a light radiator in accordance with the generic parts of the claims 1 and 5 for effectively diffusing and radiating light rays which have been transmitted through an optical cable or the like outside of said optical conductor cable.

The present applicant has previously proposed various ways to focus solar rays or artificial light rays by use of lenses or the like and to guide them into an optical conductor cable, and thereby to transmit then onto an optional desired place. The solar rays or artificial light rays transmitted and emitted in such a way are employed for the photo-synthesis process to promote the cultivation of plants and for use in illumination.

However, in the case of utilizing light energy for cultivating plants as mentioned above, the light rays transmitted through the optical conductor cable have directional characteristics. Supposing that the end portion of the optical conductor cable is cut off and the light rays are emitted therefrom, the radiation angle for the focused light rays is, in general, equal to approximately 46°. That is quite a narrow field. In the case of utilizing light energy as described above, it is impossible to obtain a desirable amount of illumination by simply cutting off the end portion of the optical conductor cable and by letting the light rays emit therefrom.

Therefore, the present applicant has already proposed various kinds of light radiators capable of effectively diffusing the light rays which have been transmitted up to them and of radiating the same rays for illuminating a desired area.

In FR—E—47 621 a light radiator for the purpose of lateral illumination is already known, which comprises a transparent cylinder, optical means for guiding light rays from a light source into said cylinder through at least one end of said cylinder, optical radiating means, i.e., mirrors and prisms, movably accommodated inside of said cylinder for laterally reflecting said light rays guided into said cylinder from said optical guiding means and for radiating said light rays outside of said cylinder and driving means, comprising the injection of gas in a liquid, filling the cylinder, for moving said optical radiating means. In said prior art however, the optical radiating means can only vibrate around a fixed average position, since they are fixed to an elastic thread stretched between the two cylinder ends.

EP—A—0 164 129, a prior art document (in the name of the applicant) in the sense of Article 54 (3) EPC, discloses a light radiator, comprising a transparent cylinder likely to be filled with optical oil, an optical conductor for guiding light rays into the cylinder through one end of it and an optical radiating means which can be moved up and down by a driving means such as a liquid pump along the axis of the cylinder for radiating said light rays outside of said cylinder.

EP—A—0 166 339, a further prior art document (also in the name of the applicant) in the sense of Article 54 (3) EPC, discloses a light radiator of a type similar to that mentioned immediately above. Said EP—A—0 166 339 discloses furthermore the possibility (cf. Fig. 8) of using a plurality of transparent cylinders, with a common liquid pump for driving the optical radiating means accommodated in each of them.

The present invention extends the idea and, in particular aims at applying intensified light rays to a desired place and at keeping the light source at a distance to plants and at moving the light source back and forth in order to supply light rays over a wider area.

It is an object of the present invention to provide a light radiator capable of effectively emitting solar rays or artificial light rays which were transmitted through an optical conductor cable outside the same for nurturing plants.

It is another object of the present invention to provide a light radiator capable of effectively moving the optical radiating means installed in a transparent cylinder.

It is another object of the present invention to provide a light radiator including at least two transparent cylinders arranged in series and an optical radiating means accommodated in each transparent cylinder to move opposite directions.

It is another object of the present invention to provide a light radiator capable of adjusting the movement amplitude of the optical radiating means in each transparent cylinder, so that the light rays can be effectively radiated and supplied to an optional desired position by limiting them to a desired area.

The present invention solves these objects by a light radiator having the features of the characterising part of either claims 1 or 5.

According to the present invention, since the respective movement of two optical radiating means are opposite, it is possible to provide a light radiator capable of much more effectively diffusing and radiating light rays.

The above-mentioned features and other advantages of the present invention will be apparent from the following detailed description which goes with the accompanying drawings.

Fig. 1 is a construction view for explaining an embodiment of the present invention;

Fig. 2 is a perspective view for explaining an embodiment of the liquid pump 40 shown in Fig. 1;

Fig. 3 is a front view of the liquid pump 40;

Fig. 4 is a cross-sectional view taken along the section line IV—IV of Fig. 3;

Fig. 5 is a cross-sectional longitudinal view of the liquid pump portion and the supporting pillar portion;

Fig. 6 is a front view of the supporting pillar; and

Fig. 7 is a back view of the supporting pillar.

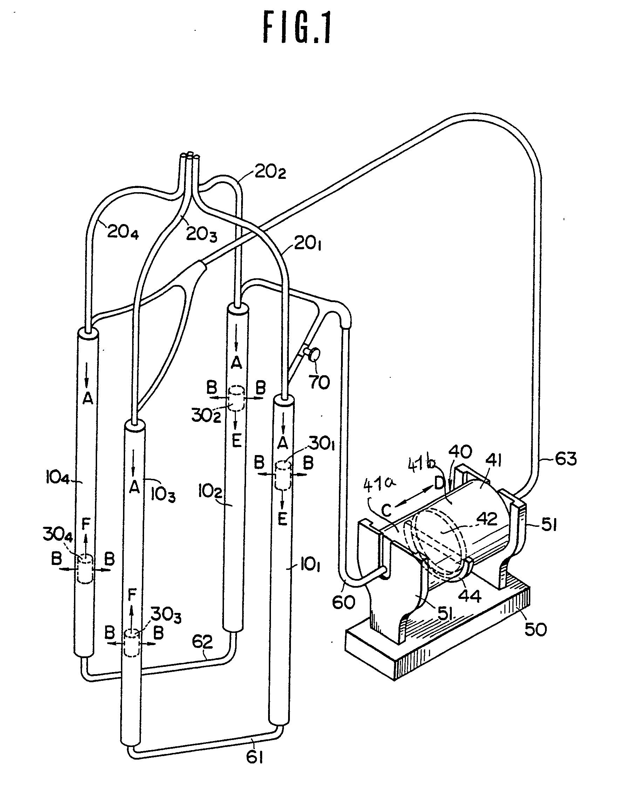

Fig. 1 is a construction view for explaining an embodiment of a light radiator according to the present invention. In Fig. 1, $10_1$ through $10_4$ are transparent cylinders, $20_1$ through $20_4$ are optical conductors, $30_1$ through $30_4$ are optical radiating means (light source means) which are movably installed in the respective cylinders, 40 a liquid pump, and 50 a foundation for carrying the liquid pump 40 thereon. Each of the cylinders $10_1$—$10_4$ is filled with optical oil.

The light rays transmitted through the optical conductors $20_1$—$20_4$ are radiated into the respective transparent cylinders $10_1$—$10_4$ and propagate in a direction shown by an arrow A inside of the respective cylinders. In this manner, the light rays radiated into the respective transparent cylinders $10_1$—$10_4$ impinge on the optical radiating means $30_1$—$30_4$ and are reflected by the same. Furthermore, the light rays are radiated in a direction shown by an arrow B from the respective transparent cylinder and supply light (energy) to the neighbouring plants. In addition, the afore-mentioned optical radiating means are explained in detail in the European patent application EP—A—0 164 129 and others previously proposed by the present applicant (inventor). Therefore any detailed explanation of the optical radiating means is omitted here.

In the respective transparent cylinders $10_1$—$10_4$, the transmission of light rays is performed effectively. The transparent cylinders are filled with optical oil in order to move the optical radiating means therein. A differential pressure is applied between the front and rear portions of the respective optical radiating means $30_1$—$30_4$ through the optical oil. The respective optical radiating means $30_1$—$30_4$, are moved by the action of the differential pressure.

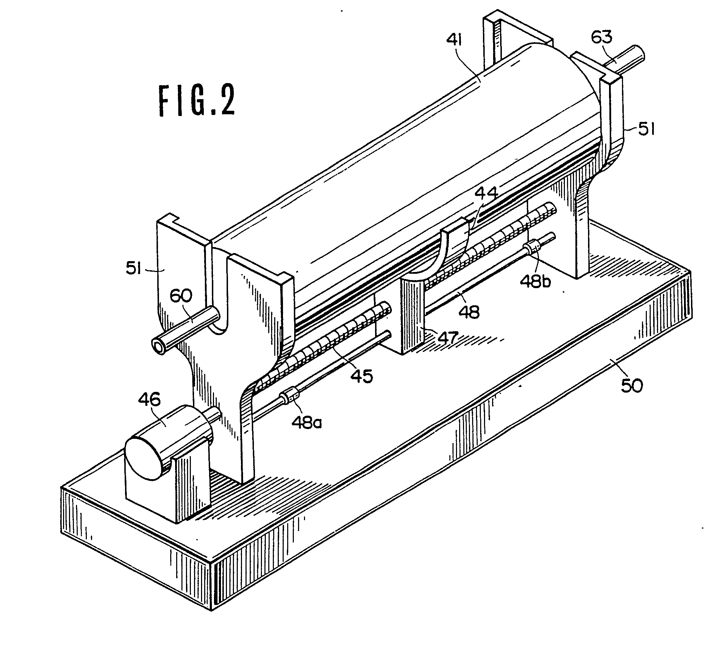

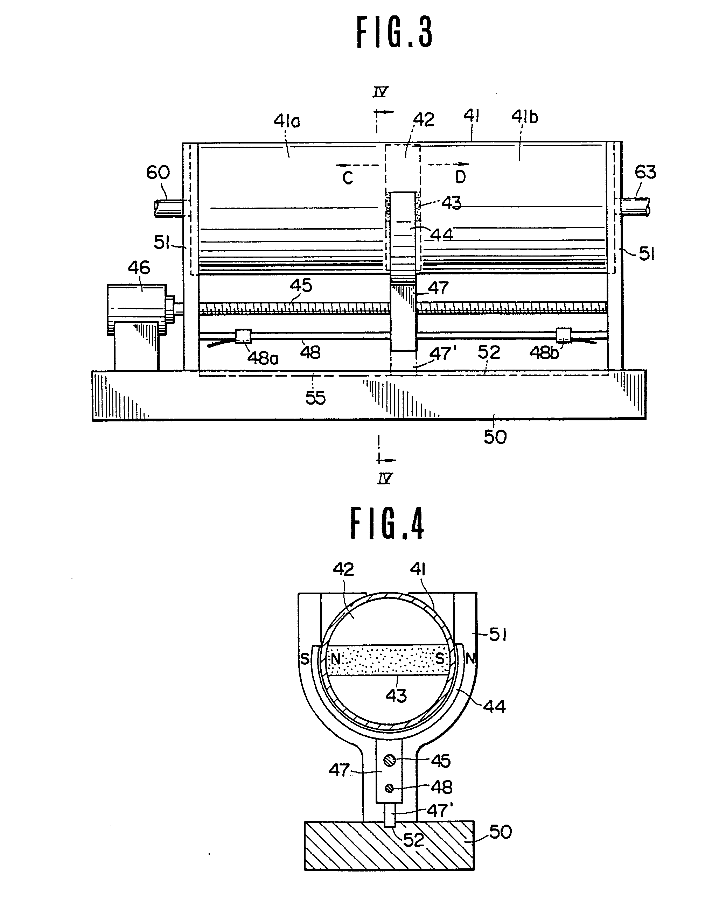

Figs. 2 to 4 are views showing an embodiment of the liquid pump 40. In Figs. 2 through 4, 41 is a large-diametered pump cylinder having a considerably larger diameter than that of the transparent cylinders $10_1$—$10_4$, and 42 is a piston plate which partitions the internal space of the pump cylinder 41 filled with optical oil and moves in a direction shown by an arrow C or D (Fig. 1 and 3). When the piston plate 42 moves in the direction of C, the pressure in the chamber 41a rises and that in the chamber 41b gets lower. Thereby the optical oil flows out from the chamber 41a through a pipe 60 and the same flows in through a pipe 63 into the chamber 41b. As a result, the optical radiating means $30_1$ and $30_2$ move in a direction shown by an arrow E and the other optical radiating means $30_3$ and $30_4$ move in a direction shown by an arrow F. Namely, the optical radiating means $30_1$ and $30_2$ and the other optical radiating means $30_3$ and $30_4$ move in opposite direction to each other.

In this manner, the optical radiating means $30_1$—$30_4$ move inside of the respective transparent cylinders $10_1$—$10_4$. However, in practice, the diameter of the transparent cylinders $10_1$ through $10_4$ is not large and there is much resistance to the flow. If a large differential pressure is not applied to the respective optical radiating means, those optical radiating means cannot be moved smoothly.

For this reason, in the embodiment of the present invention, a piston cylinder type pump as shown in Figs. 2—2 4 is utilized as liquid pump 40.

The inner diameter of the pump cylinder 41 or the diameter of the piston 42 are made considerably larger than the diameter of the transparent cylinders $10_1$—$10_4$, and the cross-sectional dimension of the piston 42 in the radial direction thereof is made larger than the total of the cross-sectional dimension of the transparent cylinders $10_1$—$10_4$. For this reason, according to the present invention, much pressure can be applied to the respective transparent cylinders $10_1$—$10_4$ with little movement of the piston 42 and the optical radiating means $30_1$—$30_4$ can be moved smoothly inside of the respective transparent cylinders $10_1$—$10_4$.

A permanent magnet 43 is unitarily mounted on the piston 42. Another permanent magnet 44 is installed on the external side of the pump cylinder 41 opposite to the permanent magnet 43 so as to move in the directions shown by the arrows C and D. The pump cylinder 41 is kept liquid-proof thereby, and then movement of the piston 42 inside the pump cylinder 41 is made possible.

In the same figures, 45 is a rod screw, 46 is a motor for rotating the rod screw 45, 47 is a support arm for unitarily supporting the permanent magnet 44, 48 is a guiding rod for stopping the rotational movement of the support arm 47 and for guiding the support arm 47 so as to move it in directions C and D, and 51 is a pump supporting pillar set up on the foundation 50. When the motor 46 is driven, the rod screw 45 rotates and the permanent magnet 44 moves in the direction of C or D following the movement of the support arm 47. Consequently, the permanent magnet 43 moves, following the permanent magnet 44. In other words, the piston 42 moves following the same. When the piston 42 moves in direction C, as mentioned before, the optical oil contained in the pump cylinder 41 flows out through the pipe 60. As a result, the optical radiating means $30_1$ and $30_2$ move in direction E and the other optical radiating means $30_3$ and $30_4$ move in direction F. The respective optical radiating means $30_1$ through $30_4$ radiate the light rays in direction B when they move.

On the contrary, when the revolution of the motor 46 is reversed, the piston 42 moves in the direction of D. At this time, the optical oil inside the pump cylinder 41 flows out through the pipe 63. Therefore, the optical radiating means $30_1$ through $30_4$ move in a direction opposite to that mentioned above. The light rays are emitted at this time in the direction of B from the respective optical radiating means $30_1$ through $30_4$.

The numerals 48a and 48b represent sensors regulating the movement amplitude of the above-mentioned permanent magnet 44. When the permanent magnet 44 moves in the direction of C and arrives at the sensor 48a, the position of the permanent magnet 44 is detected and the revolutions of the motor 46 are reversed. At this time, the permanent magnet 44 moves in direction D. When the permanent magnet arrives at the sensor 48b, the position of the permanent magnet 44 is detected thereby and the revolutions of the motor 40 are reversed again and the permanent magnet 44 moves in direction C.

In this manner, the movement of the permanent magnet 44 is reversed by the sensors 48a and 48b. The position of those sensors 48a and 48b can be adjusted to the movement of the permanent magnet 44. If the distance between those sensors 48a and 48b is narrowed, the movement area of the permanent magnet 44, that is, of the piston 42 becomes narrow. Therefore, the movement amplitude of the optical radiating means $30_1$—$30_4$ also becomes narrow. On the contrary, if the distance between the sensors 48a and 48b is enlarged, the movement amplitude of the optical radiating means $30_1$—$30_4$ becomes wider. In this manner, the movement amplitude of the optical radiating means $30_1$—$30_4$ can be adjusted to create optimum use of the light radiator.

As described above, the optical oil flowing out from the pipe 60 enters the transparent cylinders $10_1$ and $10_2$, and it flows out from those transparent cylinders $10_1$ and $10_2$ while pushing the optical radiating means $30_1$ and $30_2$ in those transparent cylinders $10_1$ and $10_2$ in the direction of E. The optical oil flowing out from the transparent cylinder $10_1$ enters the transparent cylinder $10_3$ through the pipe 61, while the optical oil flowing out from the transparent cylinder $10_2$ enters the transparent cylinder $10_4$ through the pipe 62. As a result, the optical radiating means $30_3$ and $30_4$ installed in those transparent cylinders move in direction F, and the optical oil circularly flows into the liquid pump 40 through the pipe 63.

Afterward, when the revolutions of the motor 46 are reversed, the circular-flow direction of the optical oil is also reversed and the optical radiating means $30_1$, $30_2$ and the other optical radiating means $30_3$, $30_4$ move in a direction opposite to that mentioned above.

As is apparent from the foregoing description, in the present invention, the transparent cylinders $10_1$ and $10_2$ and the other transparent cylinders $10_3$ and $10_4$ are arranged parallel to each other physically. Furthermore, those pairs of transparent cylinders, connected in series, flow dynamically. The movement of the optical radiating means $30_1$ (or $30_2$) in the transparent cylinder $10_1$ (or $10_2$) and that of the optical radiating means $30_3$ (or $30_4$) in the transparent cylinder $10_3$ (or $10_4$) are always opposite to each other. Consequently the light sources can be effectively arranged in the case of needing a large number of movable light sources, etc. Since the movement direction of the light sources is different, the light rays can be diffused more effectively.

In the example as shown in the drawings, the transparent cylinders $10_1$ and $10_2$ are provided for optical radiating means $30_1$ and $30_2$ which are moving in direction E and the transparent cylinders $10_3$ and $10_4$ are provided with otical radiating means $30_3$ and $30_4$ moving in direction F, namely, two transparent cylinders are provided for each one of the directions shown in Fig. 1. However, one or optionally plural transparent cylinders can be provided for each direction. In the case of employing plural transparent cylinders, the outflow ends and the inflow ends of the transparent cylinders with the optical radiating means moving in the same direction are commonly connected with each other. As shown in Fig. 1, the outflow ends of transparent cylinders $10_1$ and $10_2$ are commonly connected and the inflow ends of the transparent cylinders $10_3$ and $10_4$ are also commonly connected. Furthermore, the connection between the commonly connected portions can be done by use of a single pipe.

And further, in Fig. 1, 70 is a throttle valve installed at the inlet side (or the outlet side) of the transparent cylinder $10_1$. If the flowdynamic resistance for the transparent cylinder $10_1$ is changed by use of the throttle valve 70, the amount of the optical oil flowing into the transparent cylinder $10_1$ is also changed so that the movement amplitude of the optical radiating means $30_1$ in the transparent cylinder $10_1$ can be changed. For instance, supposing that the throttle valve 70 regulates the flowdynamic resistance of transparent cylinder $10_1$ so as to set it to the valve twice as much as for transparent cylinder $10_2$, the optical oil to be supplied to the transparent cylinders $10_1$ and $10_2$ through the pipe 60 or 63 is distributed to those transparent cylinders proportionally. On that occasion, there is supplied to the transparent cylinder $10_1$ half the amount of the optical oil supplied to the transparent cylinder $10_2$. As a result, the optical radiating means $30_1$ in the transparent cylinder $10_1$ moves in a range of half the distance compared to that upon which the optical radiating means $30_2$ moves in the transparent cylinder $10_2$.

As is the case shown in Fig. 1, the movement amplitude of the optical radiating means $30_3$ in the transparent cylinder $10_3$ turns out to be narrow as a matter of course. However, the present invention is not limited to the embodiment shown in Fig. 1. On that occasion, only the transparent cylinders $10_1$ and $10_2$ may be employed for constructing the flowing route by omitting transparent cylinders $10_3$ and $10_4$. Furthermore, it may be possible to connect a desired number of transparent cylinders in parallel with the transparent cylinders $10_1$ and $10_2$, to add the throttle valve as mentioned before for each transparent cylinder, and to regulate the movement amplitude of the optical radiating means per each transparent cylinder. Furthermore, it may be possible to adjust the throttling degree of the throttle valve 70 by remote control as well as the distance between the sensors 48a and 48b, and so on. In this manner, the remote controlled operation can be performed for all elements.

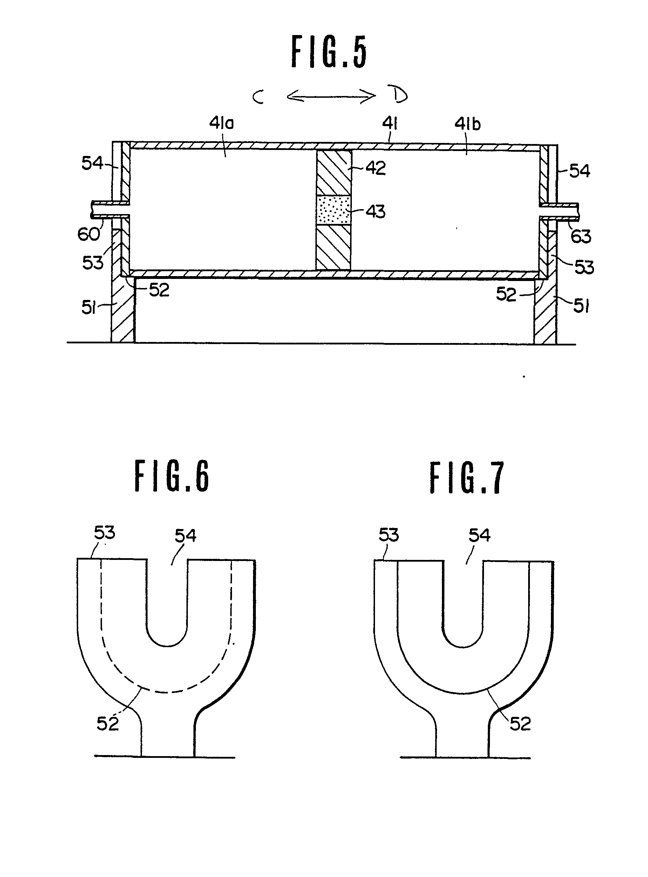

Figs. 5 to 7 are views of the liquid pump portion and its supporting pillar portion. As shown in said Figs. 5 through 7, the supporting pillar 51 is comprised of an arched surface portion 52 for carrying the liquid pump 40, a side plate portion 53 for preventing the liquid pump 40 from moving in the direction of its axis, and a slit 54 for putting the pipes 60 and 63 therein at the time of carrying the liquid pump 40 on the arched surface 52 of the supporting pillar 51. Such a construction enables it to easily carry the liquid pump 40 on the supporting pillar 51 and to prevent the liquid pump 40 from moving in the directions C or D.

Namely, in the present invention, the optical oil in the pump cylinder 41 flows out or flows in when the piston 42 moves in the direction C or D. At that time, if the pump cylinder 41 is not prevented from moving along the axis thereof, the pump cylinder 41 moves so that the optical oil cannot effectively flow out from the liquid pump. However, the construction of the supporting pillar 51 as shown in Figs. 5 through 7 enables it to prevent the pump cylinder 41 from moving by use of a side plate portion 53. Then, since the side plate 53 has a slit 54 allowing the pipe 60 or 63 to pass therethrough, the pump cylinder 41 can be simply installed only by putting it on the supporting pillar 51 from an upper position.

The embodiment for employing a guiding rod 48 for preventing the permanent magnet 44 from rotating has been described heretofore. However, as shown by the dot-and-dash line in Figs. 3 and 4, a groove 55 is formed on the foundation 50 along the movement direction of the permanent magnet 44 and the lower end 47' of a supporting arm 47 for supporting the permanent magnet 44 can be allowed to be put on the groove 55 so that the lower end 47' thereof can move inside the groove.

As is apparent from the foregoing description, according to the present invention, it is possible to provide a light radiator capable of effectively moving the optical radiating means installed in the transparent cylinders. And further, according to the present invention, since the respective movement of two optical radiating means are opposite each other, it may be possible to provide a light radiator capable of much more effectively diffusing and radiating light rays. Furthermore, since the movement amplitude of the optical radiating means in each transparent cylinder can be optionally adjusted, the light rays can be effectively radiated and supplied to an optional desired position by limiting them to a desired area. These are the merits of the present invention.

**Claims**

1. A light radiator, comprising at least one transparent cylinder $(10_1-10_4)$, optical guiding means $(20_1-20_4)$ for guiding light rays from a light source into said cylinder through one end of said cylinder, optical radiating means $(30_1-30_4)$ movably accommodated in said cylinder for laterally reflecting said light rays guided into said cylinder from said optical guiding means and for radiating said light rays outside of said cylinder, and driving means for moving said optical radiating means inside said cylinder, characterised in that said optical guiding means $(20_1-20_4)$ is constituted by an optical conductor, in that said movable optical radiating means $(30_1-30_4)$ is formed of a member slidably inserted in said transparent cylinder $(10_1-10_4)$ so as to be freely movable along the axis of said cylinder, and in that said driving means comprises an optical oil filled in said transparent cylinder $(10_1-10_4)$ and a liquid pump (40) having one end communicating with one end of said transparent cylinder and another end communicating with the other end of said transparent cylinder so as to move said optical radiating means along the axis of said transparent cylinder by means of said liquid pump, said liquid pump (40) comprising a pump cylinder (41) also filled with said optical oil, of a larger diameter than that of said transparent cylinder $(10_1-10_4)$, a piston plate (42, 43) partitioning said large-diametered pump cylinder (41) and movable there-inside along the axis thereof, and piston driving means (44-46) for moving said piston plate, wherein said one end of said liquid pump (40) communicating with said one end of said transparent cylinder $(10_1-10_4)$ is constituted by one end of said large-diametered pump cylinder (41) and said other end of said liquid pump communicating with said other end of said transparent cylinder $(10_1-10_4)$ is constituted by the other end of said large-diametered pump cylinder (41).

2. A light radiator as defined in claim 1, characterised in that said piston plate (42, 43) comprises a permanent magnet (43) and said piston driving means (44, 46) also comprises another permanent magnet (44) movably mounted on the external side of the pump cylinder (41) so as to be opposite to the former inner permanent magnet 43), said piston plate (42, 43) moving in accordance with the movement of said outer permanent magnet (44).

3. A light radiator as defined in claims 1 or 2, characterised in that it comprises at least a sensor (48a, 48b) for regulating the movement amplitude of said piston driving means (44), said sensor detecting the location of said piston driving means (44) and controlling the reversing of the direction of its movement.

4. A light radiator as defined in one of the claims 1 to 3, characterised in that said light radiator comprises at least two $(10_1-10_3)$ of said transparent cylinders $(10_1-10_4)$ with an optical radiating means $(30_1, 30_3)$ movably accommodated in each of them, said two transparent cylinders $(10_1, 10_3)$ being disposed parallel to each other, and connected with each other in series in the pumping circuit, in a manner such that they are connected with each other by one of their ends through a pipe (61, 62), whilst they are connected by their other end with the respective ends of the liquid pump (40) through respective pipes (60, 63).

5. A light radiator, comprising at least one transparent cylinder $(10_1-10_4)$, optical guiding means $(20_1-20_4)$ for guiding light rays from a light source into said cylinder through one end of said cylinder, optical radiating means $(30_1-30_4)$ movably accommodated inside of said cylinder for laterally reflecting said light rays guided into said cylinder from said optical guiding means and for radiating said light rays outside said cylinder, and driving means for moving said optical radiating means inside said cylinder, characterised in that said optical guiding means $(20_1—20_4)$ is constituted by an optical conductor, in that said movable optical radiating means $(30_1—30_4)$ is formed of a member slidably inserted in said transparent cylinder $(10_1—10_4)$ so as to be freely movable along the axis of said cylinder, in that said driving means comprises optical oil filled in said transparent cylinder $(10_1—10_4)$ and a liquid pump (40) having one end communicating with one end of said transparent cylinder and another end communicating with the other end of said transparent cylinder so as to move said optical radiating means along the axis of said transparent cylinder by means of said liquid pump, in that said light radiator comprises at least two $(10_1, 10_2)$ of said transparent cylinders $(10_1—10_4)$ with an optical radiating means $(30_1, 30_2)$ movably accommodated in each of them, said two transparent cylinders $(10_1, 10_2)$ being disposed parallel to each other, and in that said at least two transparent cylinders $(10_1, 10_2)$ are connected with each other in parallel in the pumping circuit, an adjustable fluid resistor (70) being added at one end of at least one $(10_1)$ of said transparent cylinders $(10_1, 10_2)$ so as to adjust the movement amplitude of the optical radiating means $(30_1)$ thereof with respect to that of the optical radiating means $(30_2)$ of the other $(10_2)$ of said transparent cylinders.

**Patentansprüche**

1. Ein Lichtabstrahler mit wenigstens einem durchsichtigen Zylinder $(10_1—10_4)$, einer optischen Leiteinrichtung $(20_1—20_4)$ zum Einleiten von Lichtstrahlen von einer Lichtquelle in den genannten Zylinder durch ein Ende des genannten Zylinders, einer bewegbar im genannten Zylinder untergebrachten optischen Abstrahleinrichtung $(30_1—30_4)$ zum Reflektieren der genannten, von der genannten optischen Leiteinrichtung in den genannten Zylinder eingeleiteten Lichtstrahlen nach seitwärts und zum Abstrahlen der genannten Lichtstrahlen nach außerhalb des genannten Zylinders, und einer Antriebseinrichtung zum Bewegen der genannten optischen Abstrahleinrichtung innerhalb des genannten Zylinders, dadurch gekennzeichnet, daß die genannte optische Leiteinrichtung $(20_1—20_4)$ durch einen optischen Leiter gebildet ist, daß die genannte bewegbare optische Abstrahleinrichtung $(30_1—30_4)$ von einem Element gebildet ist, welches verschiebbar in den genannten durchsichtigen Zylinder $(10_1—10_4)$ eingesetzt ist, um entlang der Achse des genannten Zylinders frei bewegbar zu sein, und daß die genannte Antriebseinrichtung ein in den genannten durchsichtigen Zylinder $(10_1—10_4)$ eingefülltes optisches Öl und eine Flüssigkeitspumpe (40) umfaßt, die ein mit einem Ende des genannten durchsichtigen Zylinders in Verbindung stehendes Ende und ein anderes, mit dem anderen Ende des genannten durchsichtigen Zylinders in Verbindung stehendes Ende aufweist, um die genannte optische Abstrahleinrichtung mittels der genannten Flüssigkeitspumpe entlang der Achse des genannten durchsichtigen Zylinders zu bewegen, wobei die genannte Flüssigkeitspumpe (40) einen ebenfalls mit dem genannten optischen Öl gefüllten Pumpzylinder (41) mit einem größeren Durchmesser als demjenigen des genannten durchsichtigen Zylinders $(10_1—10_4)$, eine den genannten Pumpzylinder (41) großen Durchmessers teilende und innerhalb desselben entlang dessen Achse bewegbare Kolbenplatte (42, 43) und eine Kolben-Antriebseinrichtung (44—46) zum Bewegen der genannten Kolbenplatte umfaßt, wobei das genannte eine, mit dem genannten einen Ende des genannten durchsichtigen Zylinders $(10_1—10_4)$ in Verbindung stehende Ende der genannten Flüssigkeitspumpe (40) durch ein Ende des genannten Pumpzylinders (41) großen Durchmessers gebildet ist und das genannte andere, mit dem genannten anderen Ende des genannten durchsichtigen Zylinders $(10_1—10_4)$ in Verbindung stehende Ende der genannten Flüssigkeitspumpe durch das andere Ende des genannten Pumpzylinders (41) großen Durchmessers gebildet ist.

2. Ein Lichtabstrahler nach Anspruch 1, dadurch gekennzeichnet, daß die genannte Kolbenplatte (42, 43) einen Permanentmagneten (43) umfaßt und die genannte Kolben-Antriebseinrichtung (44, 46) ebenfalls einen anderen Permanentmagneten (44) umfaßt, der bewegbar an der Außenseite des Pumpzylinders (41) angebracht ist, damit er dem ersterwähnten, inneren Permanentmagneten (43) gegenüberliegt, wobei sich die genannte Kolbenplatte (42, 43) in Übereinstimmung mit der Bewegung des genannten äußeren Permanentmagneten bewegt.

3. Ein Lichtabstrahler nach den Ansprüchen 1 oder 2, dadurch gekennzeichnet, daß er wenigstens einen Meßfühler (48a, 48b) zum Regulieren der Bewegungsamplitude der genannten Kolben-Antriebseinrichtung (44) umfaßt, wobei der genannte Meßfühler die Position der genannten Kolben-Antriebseinrichtung (44) ermittelt und die Richtungsumkehr der Bewegung derselben steuert.

4. Ein Lichtabstrahler nach einem der Ansprüche 1 bis 3, dadurch gekennzeichnet, daß der genannten Lichtabstrahler wenigstens zwei $(10_1, 10_3)$ der genannten durchsichtigen Zylinder $(10_1—10_4)$ mit einer in jedem von ihnen bewegbar untergebrachten optischen Abstrahleinrichtung $(30_1, 30_3)$ umfaßt, wobei die genannten zwei durchsichtigen Zylinder $(10_1, 10_3)$ parallel zueinander angeordnet und miteinander in Reihe im Pumpenkreislauf derart verbunden sind, daß sie mit einem ihrer Enden durch ein Rohr (61, 62) miteinander verbunden sind, während sie mit ihrem anderen Ende mit den jeweiligen Enden der Flüssigkeitspumpe (40) durch betreffende Rohe (60, 63) verbunden sind.

5. Ein Lichtabstrahler mit wenigstens einem durchsichtigen Zylinder ($10_1$—$10_4$), einer optischen Leiteinrichtung ($20_1$—$20_4$) zum Einleiten von Lichtstrahlen von einer Lichtquelle in den genannten Zylinder durch ein Ende des genannten Zylinders, einer bewegbar im genannten Zylinder untergebrachten optischen Abstrahleinrichtung ($30_1$—$30_4$) zum Reflektieren der genannten, von der genannten optischen Leiteinrichtung in den genannten Zylinder eingeleiteten Lichtstrahlen nach seitwärts und zum Abstrahlen der genannten Lichtstrahlen nach außerhalb des genannten Zylinders, und einer Antriebseinrichtung zum Bewegen der genannten optischen Abstrahleinrichtung innerhalb des genannten Zylinders, dadurch gekennzeichnet, daß die genannte optische Leiteinrichtung ($20_1$—$20_4$) durch einen optischen Leiter gebildet ist, daß die genannte bewegbare optische Abstrahleinrichtung ($30_1$—$30_4$) von einem Element gebildet ist, welches verschiebbar in den genannten durchsichtigen Zylinder ($10_1$—$10_4$) eingesetzt ist, um entlang der Achse des genanten Zylinders frei bewegbar zu sein, und daß die genannte Antriebseinrichtung ein in den genannten durchsichtigen Zylinder ($10_1$—$10_4$) eingefülltes optisches Öl und eine Flüssigkeitspumpe (40) umfaßt, die ein mit einem Ende des genannten durchsichtigen Zylinders in Verbindung stehendes Ende und ein anderes, mit dem anderen Ende des genannten durchsichtigen Zylinders in Verbindung stehendes Ende aufweist, um die genannte optische Abstrahleinrichtung mittels der genannten Flüssigkeitspumpe entlang der Achse des genannten durchsichtigen Zylinders zu bewegen, daß der genannte Lichtabstrahler wenigstens zwei ($10_1$, $10_3$) der genannten durchsichtigen Zylinder ($10_1$—$10_4$) mit einer in jedem von ihnen bewegbar untergebrachten optischen Abstrahleinrichtung ($30_1$, $30_3$) umfaßt, wobei die genannten zwei durchsichtigen Zylinder ($10_1$, $10_3$) parallel zueinander angeordnet sind, und daß die genannten, wenigstens zwei durchsichtigen Zylinder ($10_1$, $10_2$) miteinander in Parallelanordnung im Pumpenkreislauf verbunden sind, wobei eine verstellbare Fluiddrossel (70) an einem Ende wenigstens eines ($10_1$) der genannten durchsichtigen Zylinder ($10_1$, $10_2$) hinzugefügt ist, um die Bewegungsamplitude seiner optischen Abstrahleinrichtung ($30_1$) in bezug auf diejenige der optischen Abstrahleinrichtung ($30_2$) des anderen ($10_2$) der genannten durch sichtigen Zylinder zu verstellen.

## Revendications

1. Un radiateur de lumière, comprenant au moins un cylindre transparent ($10_1$—$10_4$), des moyens optique de guidage ($20_1$—$20_4$) pour guider des rayons lumineux à partir d'une source lumineuse dans ledit cylindre à travers une extrémité dudit cylindre, des moyens optiques de rayonnement ($30_1$—$30_4$) logés de façon mobiles dans ledit cylindre pour réfléchir latéralement lesdits rayons lumineux guidés dans ledit cylindre à partir desdits moyens optiques de guidage et pour rayonner lesdits rayons lumineux à l'extérieure dudit cylindre, et des moyens d'entraînement pour déplacer lesdits moyens optiques de rayonnement à l'intérieur dudit cylindre, caractérisé en ce que lesdits moyens optiques de guidage ($20_1$—$20_4$) sont constitués par un conducteur optique, en ce que lesdits moyens mobiles optiques de rayonnement ($30_1$—$30_4$) sont formé d'un organe inséré en coulissement dans ledit cylindre transparent ($10_1$—$10_4$) de façon à être mobile librement le long de l'axe dudit cylindre, et en ce que lesdits moyens d'entraînement comprennent une huile optique qui remplit ledit cylindre transparent ($10_1$—$10_4$) et une pompe à liquid (40) possédant une extrémité en communication avec une extrémité dudit cylindre transparent et une autre extrémité en communication avec l'autre extrémité dudit cylindre transparent de façon à déplacer lesdits moyens optiques de rayonnement le long de l'axe dudit cylindre transparent au moyen de ladite pompe à liquide, ladite pompe à liquide (40) comprenant un cylindre (41) de pompe, reampli lui aussi de ladite huile optique, d'un diamètre plus important que celui dudit cylindre transparent ($10_1$—$10_4$), une plaque formant piston (42, 43) divisant ledit cylindre (41) de pompe de grand diamètre et mobile à l'intérieur de celui-ci le long de l'axe de celui-ci, et des moyens (44, 46) d'entraînement de piston pour déplacer ladite plaque formant piston, où ladite une extrémité de ladite pompe (40) à liquide en communication avec ladite une extrémité dudit cylindre transparent ($10_1$—$10_4$) est constitué d'une extrémité dudit cylindre (41) de pompe de grand diamètre et ladite autre extrémité de ladite pompe à liquide en communication avec ladite autre extrémité dudit cylindre transparent ($10_1$—$10_4$) est constituée par l'autre extrémité dudit cylindre (41) de pompe de grande diamètre.

2. Un radiateur de lumière selon la revendication 1, caractérisé en ce que ladite plaque formant piston (42, 43) comprent un aimant permanent (43) et en ce que lesdits moyens (44, 46) d'entraînement de piston comprennent aussi un autre aimant permanent (44) monté de façon mobile sur le côté extérieur du cylindre (41) de pompe de façon à être à l'opposé dudit premier aimant permanent intérieur (43), ladite plaque formant piston (42, 43) se déplaçant selon le mouvement dudit aimant permanent extérieur (44).

3. Un radiateur de lumière selon les revendications 1 ou 2, caractérisé en ce qu'il comprend au moins un détecteur (48a, 48b) pour réguler l'amplitude du déplacement desdits moyens (44) d'entraînement de piston, ledit détecteur détectant la position desdits moyens (44) d'entraînement de piston et commandant l'inversion du sens de son déplacement.

4. Un radiateur de lumière selon l'une des revendications 1 à 3, caractérisé en ce que ledit radiateur de lumière comprend au moins deux ($10_1$—$10_3$) desdits cylindres transparents ($10_1$, $10_3$) comportant des moyens optiques de rayonnement ($30_1$, $30_3$) logés de façon mobile dans chacun d'eux, lesdits deux cylindres transparents $(10_1, 10_3)$ étant disposés parallèlement l'un à l'autre, et reliés l'un à l'autre en série dans le circuit da pompage d'une manière telle qu'ils sont reliés l'un à l'autre par l'une de leurs extrémités à travers un tuyau (61, 62) tandis qu'ils sont reliés par leur autre extrémité avec les extrémités respectives de la pompe (40) à liquide à travers des tuyaux respectifs (60, 63).

5. Un radiateur de lumière comprenant au moins un cylindre transparent $(10_1-10_4)$, des moyens optiques de guidage $(20_1-20_4)$ pour guider des rayons lumineux à partir d'une source lumineuse dans ledit cylindre à travers une extrémité dudit cylindre, des moyens optiques de rayonnement $(30_1-30_4)$ logés de façon mobile à l'intérieur dudit cylindre pour réfléchir latéralement lesdits rayons lumineux guidés dans ledit cylindre à partir desdits moyens optiques de guidage et pour rayonner lesdits rayons lumineux à l'extérieur dudit cylindre, et des moyens d'entraînement pour déplacer lesdits moyens optiques de rayonnement à l'intérieur dudit cylindre, caractérisé en ce que lesdits moyens optiques de guidage $(20_1-20_4)$ sont constitués par un conducteur optique, en ce que lesdits moyens optiques mobiles de rayonnement $(30_1-30_4)$ sont formés d'un organe inséré en coulissement dans ledit cylindre transparent $(10_1-10_4)$ de façon à être mobiles librement le long de l'axe dudit cylindre, en ce que lesdits moyens d'entraînement comprennent une huile optique remplissant ledit cylindre transparent $(10_1-10_4)$ et une pompe (40) à liquide possédant une extrémité en communication avec une extrémité dudit cylindre transparent et une autre extrémité en communication avec l'autre extrémité dudit cylindre transparente de façon à déplacer lesdits moyens optiques de rayonnement le long de l'axe dudit cylindre transparent au moyen de ladite pompe à liquide, en ce que ledit radiateur de lumière comprend au moins deux $(10_1-10_2)$ desdits cylindres transparents $(10_1-10_4)$ comportant un moyen optique de rayonnement $(30_1-30_2)$ logé de façon mobile dans chacun d'eux lesdits deux cylindres transparents $(10_1-10_2)$ étant disposés parallèlement l'un à l'autre, et en ce que lesdits au moins deux cylindres transparents $(10_1-10_2)$ sont reliés l'un à l'autre en parallèle dans le circuit de pompage, une résistance fluide réglable (70) étant ajoutée à une extrémité d'au moins l'un $(10_1)$ desdits cylindres transparents $(10_1-10_2)$ de façon à regler l'amplitude du déplacement des moyens optiques de rayonnement $(30_1)$ de celui-ci par rapport à celle des moyens optiques de rayonnement $(30_2)$ de l'autre $(10_2)$ desdits cylindres transparents.

# FIG.1

FIG.2

# FIG.3

IV

41a    42    41    41b

60    C    D    63

43

51    44    51

46

45    47

48a    48    47'    52    48b

55

50

IV

# FIG.4

42    41

51

S    N    S    N

43    44

47    45

48

47'

52    50

# FIG.5

C ⟷ D

41a          41          41b

54          42

43

54

60          63

53          53

51          52          52          51

# FIG.6

53          54

52

# FIG.7

53          54

52